# EUROPÄISCHE PATENTANMELDUNG

(11) **EP 1 284 574 A1**
(43) Veröffentlichungstag der Anmeldung: **19.02.2003**
(21) Anmeldenummer: 01119964.3
(22) Anmeldetag: 18.08.2001
(51) Int. Cl.: H04M 1/57, H04Q 3/72

(54) **Verfahren und Anordnung zur Anzeige einer einem Telekommunikationsendgerät zugeordneten Identifikation**

(71) Anmelder: SIEMENS AKTIENGESELLSCHAFT, 80333 München (DE)
(72) Erfinder: Wieser, Stefan, 2120 Wolkersdorf (AT)
(74) Vertreter: Peham, Alois, Dipl.-Ing.

(57) **Zusammenfassung**

Es wird ein Verfahren und eine Anordnung zur Anzeige einer einem ersten Telekommunikationsendgerät (TEL1) zugeordneten Identifikation (ID) bei einem zweiten Telekommunikationsendgerät (TEL2) in einem Telekommunikationsnetz (NET) angegeben, wobei zwischen dem zweiten Telekommunikationsendgerät (TEL2) und einem dritten Telekommunikationsendgerät (TEL3) eine Sprechverbindung besteht. Dabei wird vorzugsweise der Name des Besitzers des ersten Telekommunikationsendgerätes (TEL1) in gesprochener Form an das zweite Telekommunikationsendgerät (TEL2) übermittelt oder alternativ dort in die gesprochene Form umgewandelt.

## Beschreibung

Die Erfindung betrifft ein Verfahren zur Anzeige einer einem ersten Telekommunikationsendgerät zugeordneten Identifikation bei einem zweiten Telekommunikationsendgerät in einem Telekommunikationsnetz bei einer bestehenden Sprechverbindung zwischen dem zweiten Telekommunikationsendgerät und einem dritten Telekommunikationsendgerät. Weiterhin betrifft die Erfindung eine Anordnung zur Durchführung des erfindungsgemäßen Verfahrens.

Durch die Vielzahl der Teilnehmer in einem Telekommunikationsnetz, die potentiell mit einem anderen Teilnehmer in Kontakt treten können, ist es nötig technische Hilfsmittel bereitzustellen, die es einem Nutzer eines Telekommunikationsendgerätes ermöglichen, auf einfache Weise festzustellen, welcher Teilnehmer des Telekommunikationsnetzes mit ihm in Kontakt treten möchte, beispielsweise durch akustische Anzeige.

Nach dem Stand der Technik kann einem Eintrag im internen Telefonbuch des Telekommunikationsendgerätes ein individuelles Rufsignal zugeordnet werden, das bei einem Anruf von einem dem Eintrag zugeordneten Telekommunikationsendgerät von einem Lautsprecher des gerufenen Telekommunikationsendgerätes abgestrahlt wird.

Vom Telekommunikationsendgerät "Ascom Eurit 40" ist weiterhin bekannt, dass einem Eintrag im internen Telefonbuch des Telefons eine individuelle Ansage zugeordnet werden kann, die bei einem Anruf von einem dem Eintrag zugeordneten Telekommunikationsendgerät abgespielt wird. Dabei kann alternativ dazu auch eine Rufmelodie ertönen.

Vom Telekommunikationsendgerät "Tiptel 195" ist bekannt, dass einem Eintrag im internen Telefonbuch des Telefons anstatt der Rufmelodie auch ein selbst aufgenommenes "Sample", also ein in der Regel einige Sekunden dauerndes akustisches Signal allgemeiner Natur, zugeordnet werden kann. Dies wird bei einem Anruf von einem dem Eintrag zugeordneten Telekommunikationsendgerät abgespielt.

Informationen über die beiden erwähnten Telekommunikationsendgeräte können unter der Internetadresse "http:\\www.isdn-tip.de" erhalten werden.

Aus der WO 00/18107 vom 30.3.2000 "System and method for identifying a calling party" ist weiterhin bekannt, dass einem Eintrag in einer Datenbank eines Mobilfunknetzes eine Information über eine Rufmelodie zugeordnet ist und dass diese Information bei einem Anruf von einem dem Eintrag zugeordneten Telekommunikationsendgerät an das gerufene Mobiltelefon übermittelt und die Melodie dort abgespielt wird.

Von dem Mobiltelefon "Panasonic GD92" ist überdies bekannt, dass auch in einem Mobiltelefon Sprache, Geräusche oder Musik als individuelle Rufsignale verwendet werden können. Informationen über dieses Gerät können unter der Internetadresse "http:\\www.panasonic.at" erhalten werden.

Aus dem Stand der Technik sind außerdem Funktionen eines Telekommunikationsnetzes bekannt, welche die optische Anzeige des rufenden Teilnehmers beim gerufenen Teilnehmer und umgekehrt ermöglichen.

Ein Beispiel ist die Funktion "Calling Line Identification Presentation", kurz CLIP, welche die Anzeige des rufenden Teilnehmers beim gerufenen Teilnehmer ermöglicht. Die optische Anzeige des gerufenen Teilnehmer beim rufenden Teilnehmer wird dagegen durch die Funktion "Connected Line Identification Presentation", kurz COLP, ermöglicht. Beide Funktionen sind sowohl in drahtgebundenen Netzen, wie zum Beispiel in einem nach dem Standard "Integrated Services Digital Network" arbeitenden Netz, kurz ISDN-Netz, als auch in Mobilfunknetzen, wie beispielsweise in einem nach dem Standard "Global System for Mobile Communication" arbeitenden Netz, kurz GSM-Netz, bekannt.

Wird etwa die Rufnummer des rufenden Teilnehmers an das gerufene Telekommunikationsendgerät übermittelt, so wird meist die Rufnummer mit den Einträgen eines im gerufenen Telekommunikationsendgerät integrierten Telefonbuchs verglichen. In Abhängigkeit des Suchergebnisses wird daraufhin entweder der einer Rufnummer zugeordnete Name, sofern ein übereinstimmender Eintrag gefunden wurde, oder andernfalls die Rufnummer selbst dargestellt. Der Nutzer eines Telekommunikationsendgerätes kann also bereits vor dem Schalten eines Sprachkanals entscheiden, ob er das Gespräch zum rufenden Teilnehmer annehmen möchte oder nicht.

Bekannt ist auch, dass nicht die Rufnummer des rufenden Teilnehmers selbst, sondern ein der Rufnummer zugeordneter Name oder beides vom Telekommunikationsnetz an das Telekommunikationsendgerät übermittelt und dort angezeigt wird. Diese Technik findet weite Verbreitung bei firmeninternen Nebenstellenanlagen.

Die optische Anzeige funktioniert in der Regel auch dann, wenn momentan ein Gespräch mit einem weiteren Teilnehmer im Telekommunikationsnetz geführt wird. Nachteilig ist jedoch, dass für die Nutzung der Dienste die Beobachtung einer Anzeigeeinheit des Telekommunikationsendgerätes nötig ist. In vielen Fällen ist dies aber nicht oder nur schwer möglich, beispielsweise wenn ein Telekommunikationsendgerät mit integrierter Anzeigeeinheit an das Ohr gehalten wird oder der Benutzer des Telekommunikationsendgerätes aus gesundheitlichen Gründen nicht in der Lage ist eine Anzeigeeinheit abzulesen.

Der Erfindung liegt also die Aufgabe zugrunde, ein Verfahren und eine Anordnung anzugeben, welche die Anzeige einer einem ersten Telekommunikationsendgerät zugeordneten Identifikation bei einem zweiten Telekommunikationsendgerät in einem Telekommunikationsnetz bei einer bestehenden Sprechverbindung zwischen dem zweiten Telekommunikationsendgerät und einem dritten Telekommunikationsendgerät verbessern.

Die Aufgabe der Erfindung wird mit einem Verfahren der eingangs erwähnten Art gelöst,
- bei dem die Anzeige der Identifikation akustisch erfolgt und
- bei dem die akustische Anzeige vom zweiten Telekommunikationsendgerät gleichzeitig mit einem empfangenen Signal der bestehenden Sprechverbindung ausgegeben wird.

Für die Nutzung des erfindungsgemäßen Verfahrens ist die Beobachtung einer Anzeigeeinheit des Telekommunikationsendgerätes nicht nötig. Beispielsweise kann der Nutzer eines Telekommunikationsendgerätes mit integrierter Anzeigeeinheit auf diese Weise während eines Gesprächs feststellen, welcher Teilnehmer des Telekommunikationsnetzes mit ihm in Kontakt treten möchte.

Besonders vorteilhaft ist ein Verfahren,
- bei dem eine dem ersten Telekommunikationsendgerät zugeordnete Identifikation an das zweite Telekommunikationsendgerät übermittelt wird und
- bei dem dort diese oder eine daraus abgeleitete Identifikation in eine akustische, gesprochene Form umgewandelt wird.

Die Umwandlung der dem ersten Telekommunikationsendgerät zugeordneten Identifikation in die gesprochene Form erfolgt hier im zweiten Telekommunikationsendgerät. Vorteilhaft ist dabei die mögliche Nutzung ohnehin bereits vorhandener Komponenten, wie zum Beispiel eines im zweiten Telekommunikationsendgerät integrierten Telefonbuchs inklusive Sprachspeicher zur Sprachwahl, der Dienste CLIP und COLP und eines dem zweiten Telekommunikationsendgerät zugeordneten Lautsprechers. Eine Änderung im Telekommunikationsnetz ist bei dieser Variante der Erfindung nicht erforderlich.

Bei der Nutzung von CLIP wird beispielsweise die vom Telekommunikationsnetz übermittelte Rufnummer mit den Einträgen im geräteinternen Telefonbuch verglichen. Ist ein entsprechender Eintrag vorhanden, so wird der Inhalt des dem Eintrag zugeordneten Sprachspeichers über den dem Telekommunikationsendgerät zugeordneten Lautsprecher abgestrahlt. Der Nutzer des zweiten Telekommunikationsendgerätes hört auf diese Weise sowohl den Inhalt des mit dem Nutzer des dritten Telekommunikationsendgerätes geführten Gesprächs, als auch die dem ersten Telekommunikationsendgerät zugeordnete Identifikation. Für den Nutzer des dritten Telekommunikationsendgerätes bleibt diese akustische Signalisierung dagegen unbemerkt.

Besonders vorteilhaft ist es weiterhin,
- wenn eine Sprechverbindung zwischen Telekommunikationsnetz und zweitem Telekommunikationsendgerät aufgebaut wird und
- wenn eine Identifikation des ersten Telekommunikationsendgerätes vom Telekommunikationsnetz akustisch, in Form von Sprache an das zweite Telekommunikationsendgerät übermittelt wird.

Die dem ersten Telekommunikationsendgerät zugeordnete Identifikation wird bei dieser Variante der Erfindung vom Telekommunikationsnetz bereits in gesprochener Form an das zweite Telekommunikationsendgerät übermittelt. Eine Umwandlung im zweiten Telekommunikationsendgerät ist daher nicht erforderlich. Diese Variante der Erfindung eignet sich deswegen besonders bei Verwendung bereits existierender Telekommunikationsendgeräte, bei denen ein Umbau nur vergleichsweise schwierig durchzuführen wäre. Ein weiterer Vorteil ist, dass für die Nutzung des Dienstes auch ein Telekommunikationsendgerät geeignet ist, welches technisch einfach aufgebaut ist.

Dabei kann, ähnlich wie bei einer Konferenzschaltung, eine zusätzliche Verbindung eines Sprachautomaten hergestellt werden, wobei aber nur der Sprachkanal vom Sprachautomaten zum zweiten Telekommunikationsendgerät maßgebend ist. Sprachautomaten sind in Telekommunikationsnetzen oft ohnehin bereits vorhanden, weswegen die Einführung des erfindungsgemäßen Verfahrens mit nur vergleichsweise geringem technischen Aufwand verbunden ist.

Eine vorteilhafte Variante der Erfindung liegt auch vor, wenn die akustische Anzeige der Identifikation in Folge eines Verbindungswunsches zwischen erstem Telekommunikationsendgerät und zweitem Telekommunikationsendgerät ausgelöst wird.

Damit ist eine Möglichkeit gegeben, beim gerufenen Telekommunikationsendgerät akustisch anzuzeigen, welcher Teilnehmer des Telekommunikationsnetzes mit dem Nutzer des gerufenen Telekommunikationsendgerätes ein Gespräch führen möchte, selbst wenn auf dem gerufenen Telekommunikationsendgerät gleichzeitig ein Gespräch mit einem weiteren Teilnehmer im Telekommunikationsnetz geführt wird.

Auf diese Weise kann beispielsweise der unter dem Begriff "Anklopfen" bekannte Dienst dahingehend erweitert werden, dass anstatt eines Signaltons gemäß dem Stand der Technik etwa der Name des rufenden Teilnehmers für die akustische Anzeige eines "anklopfenden" Teilnehmers herangezogen wird.

Eine günstige Ausgestaltung der Erfindung ist mit einem Verfahren gegeben,
- bei dem der Nutzer des zweiten Telekommunikationsendgerätes den Verbindungswunsch zum ersten Telekommunikationsendgerät annehmen oder abweisen kann, nachdem akustische Übermittlung der Identifikation gestartet wurde und
- bei dem bei Annnahme des Verbindungswunsches eine Sprechverbindung zwischen erstem Telekommunikationsendgerät und zweitem Telekommunikationsendgerät aufgebaut wird.

Oft ist es für den Nutzer eines Telekommunikationsendgerätes wünschenswert mit dem rufenden Teilnehmer nicht in Kontakt zu treten, wenn bereits ein Gespräch mit einem weiteren Teilnehmer geführt wird und dieses nur bei Verbindungswünschen wichtiger Teilnehmer unterbrochen werden soll. Diese Variante der Erfindung bietet die Grundlage, ein Gespräch nur bei Annahme des Verbindungswunsches auch tatsächlich durchzuschalten. Das Abweisen oder Annehmen des Gesprächs kann dabei auch während der Übermittlung der Identifikation erfolgen.

Vorteilhaft ist es auch, wenn als Identifikation eine dem ersten Telekommunikationsendgerät zugeordnete Rufnummer und/oder ein dem ersten Telekommunikationsendgerät zugeordneter Name, insbesondere der Name des Besitzers des ersten Telekommunikationsendgerätes, vorgesehen wird.

Für die Übermittlung der Rufnummer können bereits vorhandene Ressourcen eines Telekommunikationsnetzes verwendet werden, da die Rufnummer eines Telekommunikationsendgerätes ohnehin bereits im Telekommunikationsnetz verfügbar ist. Denkbar ist aber auch die Übermittlung eines dem Telekommunikationsendgerät zugeordneten Namens, welcher für die Nutzer eines Telekommunikationsnetzes in der Regel einprägsamer ist, als eine Rufnummer. Dies trifft besonders dann zu, wenn hierfür der Name des Besitzers eines Telekommunikationsendgerätes verwendet wird.

Eine günstige Variante der Erfindung ist gegeben, wenn die Identifikation mittels im Telekommunikationsnetz gespeicherter Informationen über das erste Telekommunikationsendgerät synthetisch erzeugt wird.

Da Sprachsynthesizer in Telekommunikationsnetzen oft bereits vorhanden sind und auch die Identifikation eines Telekommunikationsendgerätes in Form einer Rufnummer im Telekommunikationsnetz verfügbar ist, kann diese Variante des erfindungsgemäßen Verfahrens vergleichsweise einfach eingeführt werden.

Günstig ist es auch, wenn die Identifikation während eines Initialisierungsvorganges in Form von Sprache im Telekommunikationsnetz gespeichert und bei der Übermittlung der Identifikation an das zweite Telekommunikationsendgerät ausgelesen wird.

Ein wesentlicher Vorteil ist dabei dass die Identifikation, im Gegensatz zur Speicherung in den Telekommunikationsendgeräten, bei dieser Variante für jeden Teilnehmer im Telekommunikationsnetz verfügbar ist. Beispielsweise kann der Name eines neuen Teilnehmers im Telekommunikationsnetz vom Betreiber des Netzes bei dessen Anmeldung in gesprochener Form im Netz hinterlegt werden. Denkbar ist aber auch dass, der Teilnehmer selbst seinen Namen spricht und im Telekommunikationsnetz speichert. Auf diese Weise kann die Identifikation individuell gestaltet werden.

Die erfindungsgemäße Aufgabe wird weiterhin mit einem Telekommunikationsendgerät gelöst,
- welches Mittel zum Empfang einer einem ersten Telekommunikationsendgerät zugeordneten Identifikation aus einem Telekommunikationsnetz umfasst und
- welches Mittel zur Umwandlung dieser oder einer daraus abgeleiteten Identifikation in eine akustische, gesprochene Form umfasst und
- bei dem Mittel zur gleichzeitigen Ausgabe der akustischen Identifikation und einer bestehenden Sprechverbindung vorhanden sind.

Da die Telekommunikationsendgeräte nach dem Stand der Technik häufig schon Komponenten umfassen, welche auch für ein erfindungsgemäßes Telekommunikationsendgerät nötig sind, ist ein Um- oder Neubau derartiger Geräte vergleichsweise einfach durchzuführen. Beispielsweise sind Mittel zum Empfang einer Identifikation, sowie Mittel zur Umwandlung dieser Identifikation in eine akustische, gesprochene Form oft vorhanden und können weiterverwendet werden, sofern diese in geeigneter Weise kombiniert werden. Beispiele hierfür sind ein im Telekommunikationsendgerät integriertes Telefonbuch inklusive Sprachspeicher zur Sprachwahl, Mittel zur Nutzung der Dienste CLIP und COLP und ein dem Telekommunikationsendgerät zugeordneten Lautsprecher.

Ein wesentlicher Vorteil bei der Einführung der erfindungsgemäßen Telekommunikationsendgeräte ist, dass eine Änderung im Telekommunikationsnetz dazu nicht erforderlich ist. Der Teilnehmer in einem Telekommunikationsnetz ist daher nicht an die Einführung der Erfindung seitens des Betreibers des Telekommunikationsnetzes gebunden. Im übrigen gelten die für das erfindungsgemäße Verfahren erwähnten Vorteile auch für die erfindungsgemäße Anordnung.

Die erfindungsgemäße Aufgabe wird auch mit einem Telekommunikationsnetz gelöst,
- welches Mittel zur Speicherung einer einem ersten Telekommunikationsendgerät zugeordneten Identifikation umfasst,
- welches Mittel zur Umwandlung dieser Identifikation in eine akustische, gesprochene Form umfasst,
- welches Mittel umfasst, die geeignet sind, eine Sprechverbindung zum zweiten Telekommunikationsendgerät aufzubauen und die akustischen Identifikation des ersten Telekommunikationsendgerätes an das zweite Telekommunikationsendgerät zu übermitteln und
- bei dem Mittel zum Einspeisen der akustischen Identifikation in eine bestehende Sprechverbindung zwischen dem zweiten und einem dritten Telekommunikationsendgerät und vorhanden sind.

Hierbei enthält das Telekommunikationsnetz Mittel zum Übersenden einer dem ersten Telekommunikationsendgerät zugeordnete Identifikation in gesprochener Form, beispielsweise Sprachautomaten, welche die im Telekommunikationsnetz gespeicherte Rufnummer eines Telekommunikationsendgerätes mittels Text-/Sprachumsetzung in die gewünschte Form umwandeln. Eine Umwandlung im zweiten Telekommunikationsendgerät ist daher nicht mehr erforderlich.

Ein Vorteil bei der Einführung der erfindungsgemäßen Anordnung ist, dass die Telekommunikationsendgeräte davon unberührt bleiben. Ein Betreiber eines Telekommunikationsnetzes kann diesen Dienst somit vergleichsweise einfach für alle Teilnehmer im Telekommunikationsnetz verfügbar machen. Auch hier gelten die für das erfindungsgemäße Verfahren erwähnten Vorteile.

Günstig ist es dabei, wenn das Telekommunikationsnetz Mittel umfasst, welche geeignet sind, die akustische Anzeige der Identifikation bei einem Verbindungswunsch vom ersten Telekommunikationsendgerät zum zweiten Telekommunikationsendgerät auszulösen.

Damit ist eine Möglichkeit gegeben, beim gerufenen Telekommunikationsendgerät akustisch anzuzeigen, welcher Teilnehmer des Telekommunikationsnetzes mit dem Nutzer des gerufenen Telekommunikationsendgerätes ein Gespräch führen möchte.

Die Erfindung wird nun anhand eines in den Figuren dargestellten Ausführungsbeispiels näher erläutert, welches die akustische Anzeige einer einem ersten Telekommunikationsendgerät TEL1 zugeordneten Identifikation ID bei einem zweiten Telekommunikationsendgerät TEL2 in einem Telekommunikationsnetz NET bei einer bestehenden Sprechverbindung zwischen dem zweitem Telekommunikationsendgerät TEL2 und einem dritten Telekommunikationsendgerät TEL3 betrifft.

Es zeigen:
Figur 1: ein Meldungs-Ablaufdiagramm zwischen einem ersten Telekommunikationsendgerät TEL1, einem Telekommunikationsnetz NET und einem zweiten Telekommunikationsendgerät TEL2, wobei ausgehend vom ersten Telekommunikationsendgerät TEL1 ein Vermittlungswunsch an das Telekommunikationsnetz NET gesendet wird und sich das gerufene, zweite Telekommunikationsendgerät TEL2 im Besetzt-Zustand befindet;
Figur 2: Bestandteile eines Telekommunikationsendgerätes, welche das Einspeisen einer akustischen Identifikation ID in eine bestehende Sprechverbindung ermöglichen;
Figur 3: Bestandteile eines Telekommunikationsnetzes, welche das Einspeisen einer akustischen Identifikation ID in eine bestehende Sprechverbindung ermöglichen.

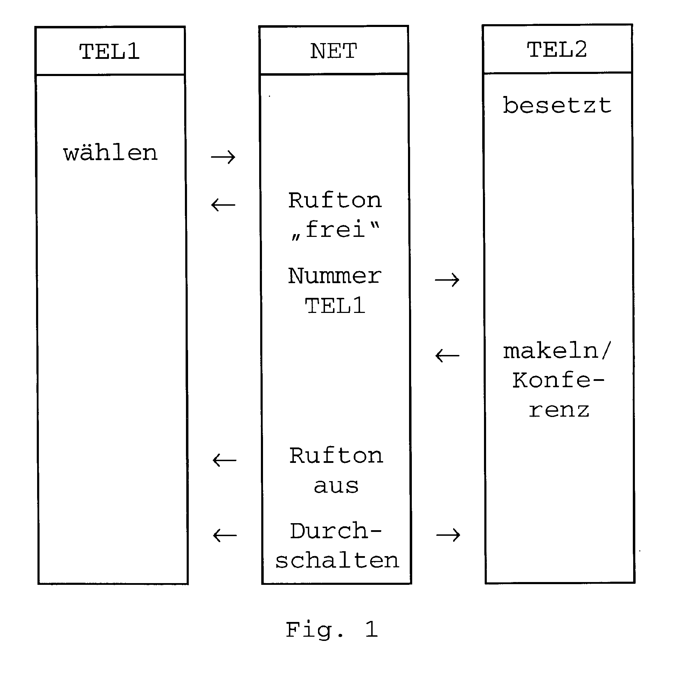

Die Funktion des in Figur 1 dargestellten Verfahrens ist wie folgt:

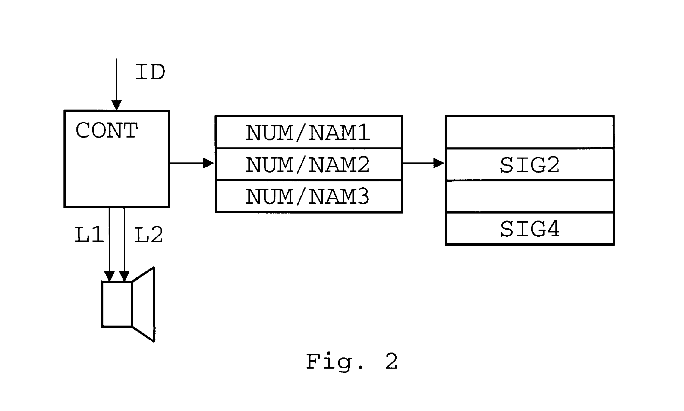

Mittels erstem Telekommunikationsendgerät TEL1 wird vom Benutzer die Nummer des zweiten Telekommunikationsendgerätes TEL2 gewählt und damit ein Verbindungswunsch zum zweiten Telekommunikationsendgerät TEL2 an das Telekommunikationsnetz NET übermittelt. Daraufhin wird mit Hilfe des Telekommunikationsnetzes NET das Ertönen des Freizeichens beim ersten Telekommunikationsendgerät TEL1 ausgelöst. In die bereits bestehende Verbindung beim zweiten Telekommunikationsendgerät TEL2 wird nun die Rufnummer des ersten Telekommunikationsendgerätes TEL1 eingespielt. Der Nutzer des zweiten Telekommunikationsendgerätes TEL2 hat die Wahl, diesen Verbindungswunsch anzunehmen oder abzuweisen. Im gezeigten Beispiel wird der Verbindungswunsch angenommen. Zu diesem Zweck werden dem Benutzer des zweiten Telekommunikationsendgerätes TEL2 zwei Optionen angeboten. Einerseits kann zwischen der Verbindung zum ersten Telekommunikationsendgerät TEL1 und der bereits bestehenden Verbindung zu einem nicht dargestellten dritten Telekommunikationsendgerät hin- und hergeschaltet werden. Diese Funktion ist auch unter dem Begriff "Makeln" bekannt. Andererseits kann auch eine Verbindung zwischen allen drei Telekommunikationsendgeräten aufgebaut werden. Diese Funktion ist auch unter dem Begriff "Konferenz" bekannt. Die Wahl erfolgt dabei beispielsweise durch Drücken einer für den jeweiligen Zweck vorgesehen Taste am zweiten Telekommunikationsendgerät TEL2. In Folge wird das Freizeichen beim ersten Telekommunikationsendgerät TEL1 abgeschaltet und die Sprechverbindung zwischen erstem und zweitem Telekommunikationsendgerät TEL1 und TEL2 hergestellt. Figur 2 umfasst eine Steuereinheit CONT, eine erste Tabelle mit einem ersten bis dritten Nummern-/Namenseintrag NUM/NAM1..NUM/NAM3, eine zweite Tabelle mit vier möglichen Einträgen, wobei der zweite Eintrag ein zweites Signal SIG2 und der vierte Eintrag ein viertes Signal SIG4 beinhaltet und die übrigen Einträge nicht vorhanden sind, und einen Lautsprecher, welcher über eine symbolhaft dargestellte erste und zweite Leitung L1 und L2 mit der Steuereinheit CONT verbunden ist.

Die Funktion der in der Figur 2 dargestellten Anordnung ist wie folgt:

Wird eine Identifikation ID von einem Telekommunikationsnetz an ein Telekommunikationsendgerät signalisiert, so wird dieses an eine Steuereinheit CONT weitergeleitet und dort verarbeitet.

Als erster Schritt wird anhand der vom Telekommunikationsnetz signalisierten Identifikation ID, im gezeigten Beispiel der Rufnummer, der dem rufenden Teilnehmers zugeordnete Eintrag im internen Telefonbuch gesucht. In unserem Beispiel erfüllt der zweite Nummern-/Namenseintrag NUM/NAM2 das Kriterium. Diesem Eintrag ist weiterhin ein zweites Signal SIG2 zugeordnet, welches in unserem Beispiel den gesprochenen Namen des rufenden Teilnehmers beinhaltet.

Sowohl ein auf der ersten Leitung L1 bestehendes Gespräch, als auch das auf der zweiten Leitung L2 anliegende zweite Signal SIG2 werden vom Lautsprecher des Telekommunikationsendgerätes abgestrahlt. Der Benutzer des Telekommunikationsendgerätes hört demzufolge sowohl weiterhin das bestehende Gespräch, als auch den Namen des rufenden Teilnehmers. Der Name kann dabei auch zusätzlich auf einer Anzeigeeinheit des Telekommunikationsendgerätes angezeigt werden.

Das vierte Signal SIG4 ist im dargestellten Beispiel für den Fall vorgesehen, dass ein Eintrag im internen Telefonbuch nicht gefunden werden kann oder einem Eintrag kein Sprachspeicher zugeordnet ist. Das vierte Signal lautet dabei also etwa "Unbekannter Teilnehmer".

Der Einsatzbereich der für die Erfindung vorgesehenen Module ist nicht auf das erfindungsgemäße Verfahren beschränkt, sondern kann sich beispielsweise auch auf die Sprachwahl erstrecken.

Weiterhin müssen sich die dargestellten Module für das erfindungsgemäße Verfahren nicht zwingend im Telekommunikationsendgerät befinden, sondern können in ähnlicher Form vom Telekommunikationsnetz umfasst sein. Insbesondere ist der Fall denkbar, dass die erste Tabelle mit dem ersten bis dritten Nummern-/Namenseintrag NUM/NAM1..NUM/NAM3 und die zweite Tabelle mit dem zweiten und vierten Signal SIG2 und SIG4 im Telekommunikationsnetz integriert ist. Die entsprechende Information wird dann, beispielsweise von einem Vermittlungsknoten an das Telekommunikationsendgerät übermittelt.

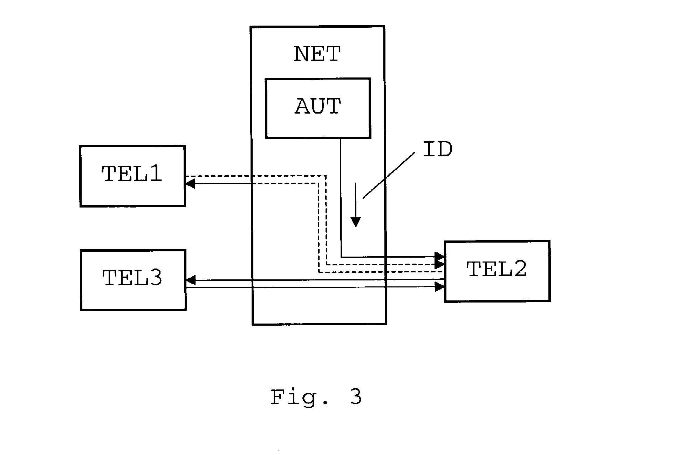

Figur 3 umfasst ein erstes bis drittes Telekommunikationsendgerät TEL1..TEL3, welche an ein Telekommunikationsnetz NET angeschlossen sind. Das Telekommunikationsnetz NET enthält überdies einen Sprachautomaten AUT.

Die Funktion der in der Figur 3 dargestellten Anordnung ist ähnlich dem in Figur 1 dargestellten Verfahren und stellt sich wie folgt dar:

Zwischen zweitem und drittem Telekommunikationsendgerät TEL2 und TEL3 besteht ein Sprechverbindung, welche durch zwei Pfeile in entgegengesetzter Richtung symbolisiert wird. Der Benutzer des zweiten Telekommunikationsendgerätes TEL2 kann also den Benutzer des dritten Telekommunikationsendgerätes TEL3 hören und umgekehrt.

Mittels erstem Telekommunikationsendgerät TEL1 wird vom Benutzer die Nummer des zweiten Telekommunikationsendgerätes TEL2 gewählt und damit ein Verbindungswunsch zum zweiten Telekommunikationsendgerät TEL2 an das Telekommunikationsnetz NET übermittelt. Daraufhin wird mit Hilfe des Telekommunikationsnetzes NET das Ertönen des Freizeichens beim ersten Telekommunikationsendgerät TEL1 veranlasst. Dies wird in der Figur durch einen Pfeil vom Telekommunikationsnetz NET zum ersten Telekommunikationsendgerät TEL1 symbolisiert.

In Folge wird eine Verbindung vom Sprachautomaten AUT zum zweiten Telekommunikationsendgerät TEL2 aufgebaut, welche ebenfalls mit Hilfe eines Pfeils dargestellt wird. Über diese Verbindung wird eine Identifikation ID des ersten Telekommunikationsendgerätes TEL1, zum Beispiel die Rufnummer oder der Name des Besitzers, an das zweite Telekommunikationsendgerät TEL2 übermittelt. Nimmt der Nutzer des zweiten Telekommunikationsendgerätes TEL2 den Verbindungswunsch an, wird das Freizeichen beim ersten Telekommunikationsendgerät TEL1 abgeschaltet, die Verbindung zum Sprachautomaten abgebrochen und die Sprechverbindung zwischen erstem und zweitem Telekommunikationsendgerät TEL1 und TEL2 hergestellt. Diese Verbindung ist durch die strichlierten, entgegengesetzten Pfeile zwischen erstem und zweitem Telekommunikationsendgerät TEL1 und TEL2 symbolisiert. Die Anordnung zeigt also den Zustand des Systems bevor der Benutzer des zweiten Telekommunikationsendgerätes den Verbindungswunsch angenommen hat.

Abschließend wird angemerkt, dass für das erfindungsgemäße Verfahren sowohl die Speicherung der Identifikation im Telekommunikationsnetz, als auch im ersten Telekommunikationsendgerät denkbar ist. Der Speicherort der Identifikation ist für die Funktionsweise der Erfindung also weniger bedeutsam.

## Patentansprüche

1. Verfahren zur Anzeige einer einem ersten Telekommunikationsendgerät (TEL1) zugeordneten Identifikation (ID) bei einem zweiten Telekommunikationsendgerät (TEL2) in einem Telekommunikationsnetz (NET), wobei zwischen dem zweiten Telekommunikationsendgerät (TEL2) und einem dritten Telekommunikationsendgerät (TEL3) eine Sprechverbindung besteht,
**dadurch gekennzeichnet,**
- **dass** die Anzeige der Identifikation akustisch erfolgt und
- **dass** die akustische Anzeige vom zweiten Telekommunikationsendgerät gleichzeitig mit einem empfangenen Signal der bestehenden Sprechverbindung ausgegeben wird.

2. Verfahren nach Anspruch 1,
**dadurch gekennzeichnet,**
- **dass** eine dem ersten Telekommunikationsendgerät (TEL1) zugeordnete Identifikation (ID) an das zweite Telekommunikationsendgerät (TEL2) übermittelt wird und
- **dass** dort diese oder eine daraus abgeleitete Identifikation in eine akustische, gesprochene Form umgewandelt wird.

3. Verfahren nach Anspruch 1,
**dadurch gekennzeichnet,**
- **dass** eine Sprechverbindung zwischen Telekommunikationsnetz (NET) und zweitem Telekommunikationsendgerät (TEL2) aufgebaut wird und
- **dass** eine Identifikation des ersten Telekommunikationsendgerätes (TEL1) vom Telekommunikationsnetz (NET) akustisch, in Form von Sprache an das zweite Telekommunikationsendgerät (TEL2) übermittelt wird.

4. Verfahren nach einem der Ansprüche 1 bis 3, **dadurch gekennzeichnet, dass** die akustische Anzeige der Identifikation in Folge eines Verbindungswunsches zwischen erstem Telekommunikationsendgerät (TEL1) und zweitem Telekommunikationsendgerät (TEL2) ausgelöst wird.

5. Verfahren nach Anspruch 4, **dadurch gekennzeichnet,**
- **dass** der Nutzer des zweiten Telekommunikationsendgerätes (TEL2) den Verbindungswunsch zum ersten Telekommunikationsendgerät (TEL1) annehmen oder abweisen kann, nachdem akustische Übermittlung der Identifikation (ID) gestartet wurde und
- **dass** bei Annnahme des Verbindungswunsches eine Sprechverbindung zwischen erstem Telekommunikationsendgerät (TEL1) und zweitem Telekommunikationsendgerät (TEL2) aufgebaut wird.

6. Verfahren nach einem der Ansprüche 1 bis 5, **dadurch gekennzeichnet, dass** die Identifikation (ID) mittels im Telekommunikationsnetz (NET) gespeicherter Informationen über das erste Telekommunikationsendgerät (TEL1) synthetisch erzeugt wird.

7. Verfahren nach einem der Ansprüche 1, 3, 4 und 5, **dadurch gekennzeichnet, dass** die Identifikation (ID) während eines Initialisierungsvorganges in Form von Sprache im Telekommunikationsnetz (NET) gespeichert und bei der Übermittlung der Identifikation (ID) an das zweite Telekommunikationsendgerät (TEL2) ausgelesen wird.

8. Telekommunikationsendgerät,
- welches Mittel zum Empfang einer einem ersten Telekommunikationsendgerät (TEL1) zugeordneten Identifikation (ID) aus einem Telekommunikationsnetz (NET) umfasst und
- welches Mittel zur Umwandlung dieser oder einer daraus abgeleiteten Identifikation in eine akustische, gesprochene Form umfasst,
**dadurch gekennzeichnet,**
- **dass** Mittel zur gleichzeitigen Ausgabe der akustischen Identifikation und einer bestehenden Sprechverbindung vorhanden sind.

9. Telekommunikationsnetz,
- welches Mittel zur Speicherung einer einem ersten Telekommunikationsendgerät (TEL1) zugeordneten Identifikation (ID) umfasst,
- welches Mittel zur Umwandlung dieser Identifikation (ID) in eine akustische, gesprochene Form umfasst und
- welches Mittel umfasst, die geeignet sind, eine Sprechverbindung zum zweiten Telekommunikationsendgerät (TEL2) aufzubauen und die akustischen Identifikation (ID) des ersten Telekommunikationsendgerätes (TEL1) an das zweite Telekommunikationsendgerät (TEL2) zu übermitteln,
**dadurch gekennzeichnet,**
- **dass** Mittel zum Einspeisen der akustischen Identifikation (ID) in eine bestehende Sprechverbindung zwischen dem zweiten und einem dritten Telekommunikationsendgerät (TEL2) und (TEL3) vorhanden sind.

10. Telekommunikationsnetz nach Anspruch 9, **dadurch gekennzeichnet, dass** dieses Mittel umfasst, welche geeignet sind, die akustische Anzeige der Identifikation (ID) bei einem Verbindungswunsch vom ersten Telekommunikationsendgerät (TEL1) zum zweiten Telekommunikationsendgerät (TEL2) auszulösen.
